# EUROPÄISCHE PATENTSCHRIFT

(11) **EP 1 132 265 B1**
(45) Veröffentlichungstag und Bekanntmachung des Hinweises auf die Patenterteilung: **15.09.2004**
(21) Anmeldenummer: 01101571.6
(22) Anmeldetag: 25.01.2001
(51) Int. Cl.: B60R 22/20

(54) **Vorrichtung für einen Gurthöhenversteller eines Sicherheitsgurtsystems**
Belt height adjustment device for a safety belt system
Dispositif réglant en hauteur la ceinture d'un système de ceinture de sécurité

(30) Priorität: 11.03.2000 DE 10011908
(43) Veröffentlichungstag der Anmeldung: 12.09.2001
(73) Patentinhaber: Dr.Ing. h.c.F. Porsche Aktiengesellschaft, 70435 Stuttgart (DE)
(72) Erfinder: Dietrich, Günter, 71691 Freiberg (DE)

(56) Entgegenhaltungen:
- EP-A- 0 927 668
- DE-A- 19 603 367
- DE-A- 19 651 092
- US-A- 4 872 704
- US-A- 5 529 344
- US-A- 6 032 982

## Beschreibung

Die Erfindung bezieht sich auf eine Vorrichtung für einen Gurthöhenversteller eines Sicherheitsgurtsystems nach dem Oberbegriff des Anspruchs 1.

Aus der DE 295 19 483 U1 ist eine Vorrichtung für einen Gurthöhenversteller eines Sicherheitsgurtsystems in einem Kraftfahrzeug bekannt, der über eine Rastschiene unter Zwischenschaltung eines Deformationselements an einer Säule eines Fahrzeugaufbaus befestigt ist. Des weiteren ist aus der DE 43 41 119 A1 eine vormontierte Trägereinheit für Funktionsteile eines Sicherheitsgurtsystems bekannt, welche die Funktionsteile des Gurtsystems aufnimmt und insgesamt an einer Säule des Fahrzeugaufbaus befestigbar ist. Ferner ist aus der DE 196 51 092 A1 eine Sicherheitsgurtvorrichtung für ein Fahrzeug bekannt, die eine Ankerschiene für die Gurtvorrichtung bildet, welche über Schrauben mit einer Säulenwand des Fahrzeugaufbaus verbunden ist und die Schraube in einem Aufprall-Absorptionselement gründet. Bei einer Aufprallsituation verformt sich dieses Element und nimmt plastisch Aufprallenergie auf. Aus der US 5,529,344 ist eine Vorrichtung gem. dem Oberbegriff des Anspruchs 1 bekannt.

Aufgabe der Erfindung ist es, eine Vorrichtung für ein Sicherheitsgurtsystem zu schaffen, die in einfacher Montage bzw. Demontageweise mit einer Fahrzeugsäule verbindbar und austauschbar ist und bei einem Kopfaufprall Energie gut absorbieren kann, wobei die Anzahl der auszutauschenden Teile nach einem Kopfaufprall gering ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Ausbildung der Vorrichtung derart, daß die Rastschiene mit einer Trägerplatte unter Zwischenschaltung eines Deformationselements an einer Säulenwand des Fahrzeugaufbaus über eine Befestigungsplatte gehalten ist, bei einem Kopfaufprall nur das Deformationselement beschädigt wird; denn in der montierten Betriebsstellung ist die

Befestigungsplatte anliegend an einer von der Säuleninnenwand abgekehrten Fläche der Säulenwand angeordnet und in einer Kopf-Aufprallstellung ist die Befestigungsplatte losgelöst von dieser Fläche der Säulenwand angeordnet.

Um dies zu erreichen, ist die Rastschiene mit der Trägerplatte über wenigstens eine durchgehende Schraube zusätzlich an der Säulenwand wenigstens über eine Einhakverbindung allein mit der Trägerplatte verbunden, wobei die Schraube an der Befestigungsplatte in eine Schweißmutter einschraubbar ist. Somit können bei einem Kopfaufprall auf den Gurthöhenversteller, sich die Verbindungsschrauben mit der Befestigungsplatte ungehindert in einen Freiraum der Säule verlagern. Eine Beschädigung der Säulenwand der Fahrzeugaufbaustruktur wird hierdurch weitestgehend vermieden, so daß nach einem Kopfaufprall nur das Deformationselement auszuwechseln ist.

Damit die Rastschiene wahlweise mit einem mechanischen oder elektrischen Höhenversteller in schneller und einfacher Weise montierbar ist, ist die Trägerplatte, d. h. die sogenannte Adapterplatte mit unterschiedlichen Aufnahmen für die Rastschiene ausgebildet. So ist bei einem mechanisch betätigbaren Gurthöhenversteller die Adapterplatte mit nebeneinanderliegenden Längsschlitzen ausgeführt, die als Einhakverbindung mit vorragenden Haken am Steg der Rastschiene in Eingriff steht. Des weiteren kann die Trägerplatte bzw. die Adapterplatte für einen elektrischen Gurthöhenversteller als Einhakverbindung am unteren Ende mindestens eine schlüsselförmige Öffnung aufweisen, die mit mindestens einem Zapfenelement am Steg der Rastschiene in Eingriff steht und das Zapfenelement einen endseitigen Rastkopf aufweist.

Dadurch, daß eine Trennung zwischen der Anbindung des Gurthöhenverstellers und dem Rohbau durch eine zwischengeschaltete Adapterplatte erfolgt, ist es möglich, eine Fahrzeugreihe mit unterschiedlich vorhandenen Gurthöhenverstellersystemen auszurüsten. Es kann auf diese Weise ein Fahrzeug in einer Basisausstattung mit einem kostengünstigen System ausgerüstet werden. Dieses System besitzt dann beispielsweise eine Befestigung mit einem Schraubpunkt und einer Einhaklösung oder eine Verbindung über zwei Schraubpunkte.

Bei einer höherwertigen Fahrzeugausstattung kann beispielsweise ein elektrisches Gurthöhenverstellsystem eingebaut werden. Bei diesem System wird beispielsweise ein Schraubpunkt und eine Einhaklösung mit der schlüsselförmigen Öffnung verwendet.

Das Deformationselement besteht beispielsweise aus einem plastisch verformbaren Rippenkörper, wobei die Rippen zur Säuleninnenwand- und zur Trägerplatte etwa in einem rechten Winkel verlaufen und zueinander beabstandet sind und zwischen den Rippen sich Hohlräume bilden. Des weiteren kann das Deformationselement auch aus einem plastisch verformbaren Wabenkörper bestehen.

Das Deformationselement kann entweder eingeklemmt zwischen der Trägerplatte und der Befestigungsplatte bzw. der Säulenwand angeordnet sein oder es ist über oben und unten angeformte hülsenartige Aufnahmen an den Befestigungsschrauben gehalten.

Die Befestigungplatte kann zusätzlich zu der Befestigung über die Schrauben mittels mindestens einer stirnseitigen- und/oder seitlichen Lasche bzw. Laschen an der Säulenwand der Fahrzeugaufbausäule festgelegt sein, die sich bei einem Kopfaufprall dann aufbiegt und die Befestigungsplatte freigibt.

Ausführungsbeispiele der Erfindung sind in den Zeichnungen dargestellt und werden im folgenden näher beschrieben.

Es zeigen:
- Figur 1: eine schaubildliche Darstellung einer Vorrichtung für einen Gurthöhenversteller mit vereinzelt dargestellten Bauteilen,
- Figur 2: einen Vertikalschnitt durch die zusammengebaute Vorrichtung,
- Figur 3: einen horizontalen Schnitt durch eine Säule des Fahrzeugaufbaus in einer Betriebsstellung und in einer Kopf-Aufprallstellung,
- Figur 4: eine schaubildliche Darstellung eines plastisch verformbaren Rippenkörpers in einer ersten Ausführungsform,
- Figur 5: eine weitere Ausführungsform eines plastisch verformbaren Rippenkörpers,
- Figur 6: eine schaubildliche Darstellung eines plastisch verformbaren Wabenkörpers,
- Figur 7: eine Montageeeinheit einer Vorrichtung bestehend aus dem Deformationselement und der Trägerplatte für die Rastschiene,
- Figur 8: eine Seitenansicht auf die Montageeinheit gemäß Figur 7,
- Figur 9: eine Trägerplatte mit Längsschlitzen für einen mechanischen Gurthöhenversteller,
- Figur 10: eine Trägerplatte mit einer schlüsselförmigen Aufnahme für einen elektrischen Gurthöhenversteller und
- Figur 11: eine teilweise Seitenansicht auf eine Befestigungsplatte mit Säulenlaschen.

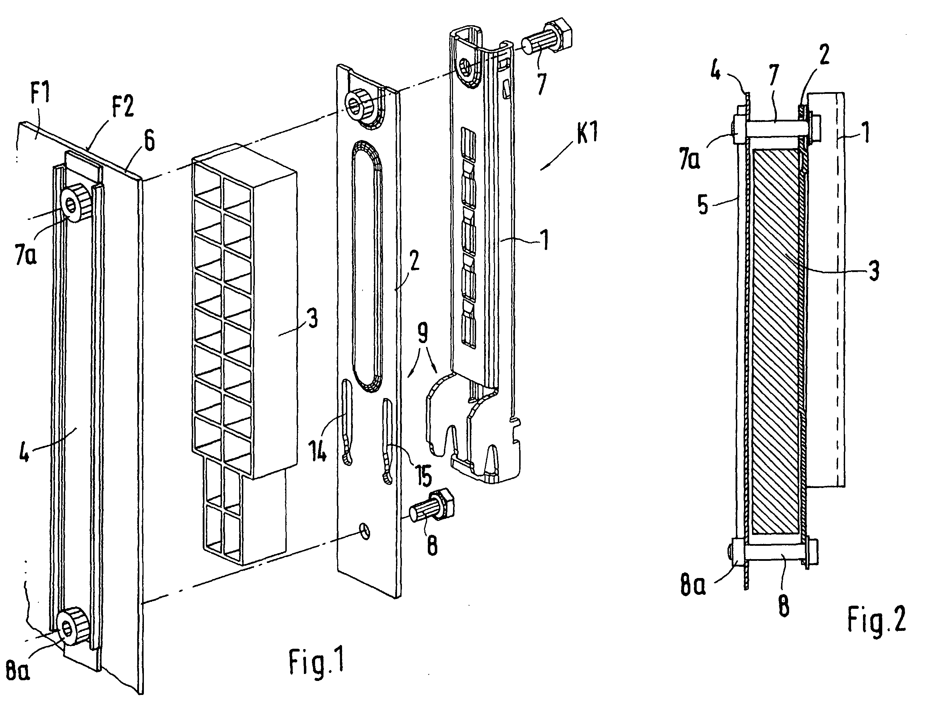

In Figur 1 ist eine Vorrichtung zur Aufnahme eines Gurthöhenverstellers mit seinen einzelnen Bauteilen, wie eine Rastschiene 1; 1a eine Trägerplatte 2; 2a ein Deformationselement 3; 3a; 3b sowie eine Befestigungsplatte 4 dargestellt.

Zwischen der Befestigungsplatte 4 und dem Deformationselement 3 ist in einer schematischen Darstellung eine Säulenwand 6 einer B- oder C-Säule einer Fahrzeugaufbaustruktur gezeigt.

Der eigentliche Gurthöhenversteller ist in der Rastschiene 1; 1a höhenverstellbar angeordnet und nicht gezeigt. Die gesamte Vorrichtung ist in einer Einbuchtung der Säule S angeordnet und über Schrauben 7, 8 mit der Säule verbunden.

Die Rastschiene 1; 1a ist mit der Trägerplatte 2; 2a unter Zwischenschaltung des Deformationselements 3; 3a; 3b an der Säulenwand 6 des Fahrzeugaufbaus mittels der

Befestigungsplatte 4 gehalten. Diese ist im montierten Zustand, das heißt in der Betriebs- oder Einbaustellung I anliegend an einer abgekehrten Fläche F1 der Säulenwand 6 gehalten. In einer Kopf-Aufprallstellung II, d.h. nach einem Kopfaufprall ist die Befestigungplatte 4 losgelöst von der abgekehrten Fläche F1 angeordnet. Diese Wirkungsweise wird dadurch erreicht, daß die Trägerplatte 2; 2a über wenigstens eine durchgehende Schraube 7 - in dem Ausführungsbeispiel Figur 1 sind zwei Schrauben 7, 8 verwendet - an der Säulenwand 6 mittels der Befestigungsplatte 4 gehalten, wobei die Schrauben 7, 8 in Schweißmuttern 7a, 8a, welche fest mit der Platte 4 verbunden sind, gehalten werden.

Die Rastschiene 1; 1a wird über die obere Befestigungsschraube 7, sowie über eine Einhakverbindung 9; 10 mit der Trägerplatte 2; 2a verbunden.

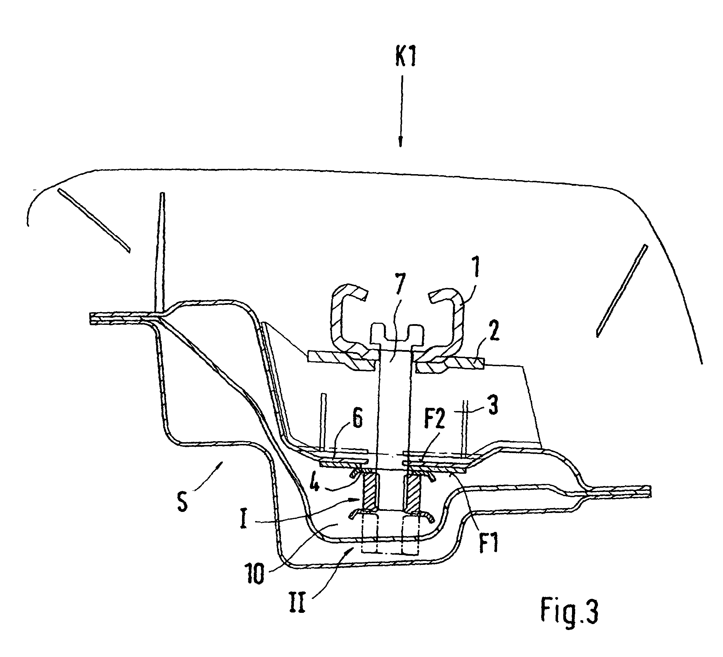

Bei einem Kopfaufprall in Pfeilrichtung K1 kann somit, wie in Figur 3 näher dargestellt, bei Deformation des Elements 3 die Schraube 7 bzw. können die Schrauben 7, 8 unter Mitnahme der Befestigungsplatte 4 sich in einen Freiraum 10 der Aufbausäule S verlagern. Bei dieser Verlagerung wird nur das Deformationselement 3 beschädigt, welches in einfacher Weise auswechselbar ist.

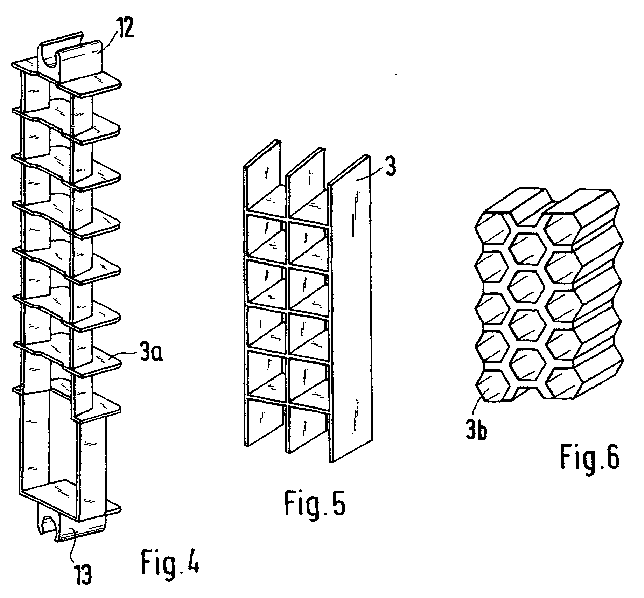

Das Deformationselement 3 kann, wie in den Ausführungen gemäß der weiteren Figuren 4 und 6 entweder einem aus einer geometrisch modifizierten Gittersystem 3a oder aus einem Wabenkörper 3b bestehen.

Das Deformationselement 3; 3a; 3b besteht vorzugsweise aus einem plastisch verformbaren Rippen- bzw. Wabenkörper, wobei die Rippen zur Säulenwand 6 und zur Trägerplatte 2; 2a etwa im rechten Winkel verlaufen und zueinander beabstandet sind und zwischen sich Höhlräume H bilden.

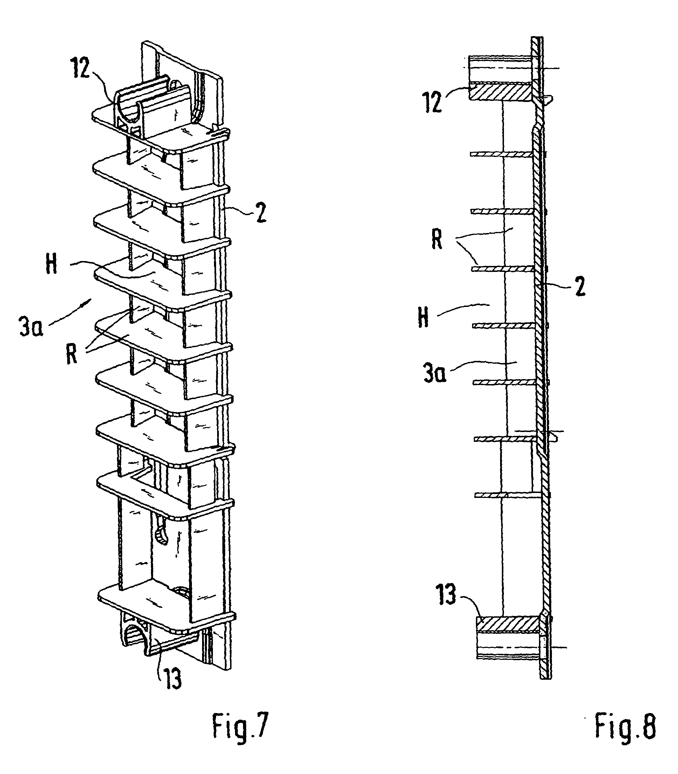

Das Deformationselement kann gemäß Figur 7 mit der Trägerplatte 2; 2a entweder einteilig ausgeführt sein, oder aber wie die Ausführung zeigt mit der Trägerplatte 2; 2a über Befestigungsklipse oder dergleichen Verbindungsmittel verbunden werden.

Das Deformationselement 3a weist vorzugsweise Aufnahmen 12, 13 für die Schrauben 7, 8 auf. Diese Aufnahmen können auch beim Deformationselement 3a; 3b gemäß der Ausführungen Figur 1, 5 und 6 vorgesehen sein.

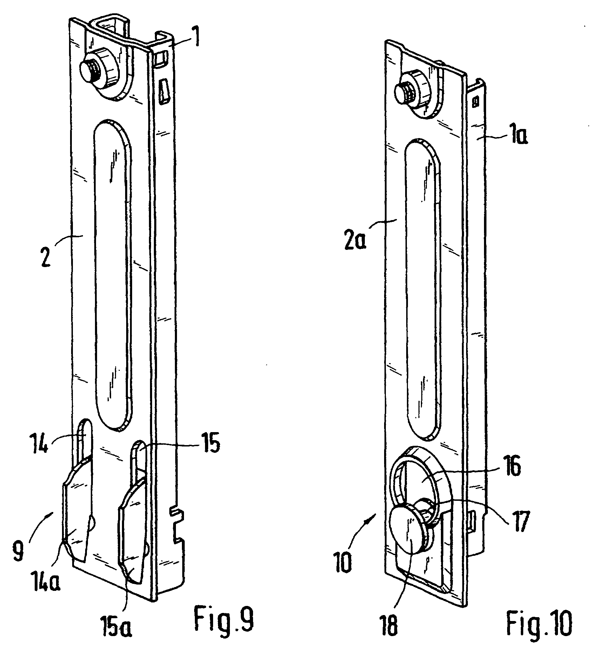

In den Figuren 9 und 10 sind Ausführungen von zwei Trägerplatten 2; 2a sogenannte Adapterplatten mit verschiedenen Möglichkeiten des Einhakens der Rastschiene 1; 1a gezeigt. So ist die Trägerplatte 2 (Fig. 9) mit zwei nebeneinanderliegenden Längsschlitzen 14, 15 versehen, in die Haken 14a, 15a der Rastschiene 1 einhakbar sind und eine Einhakverbindung 9 gemäß Figur 1 darstellen.

In Figur 10 ist die Trägerplatte 2a mit einer schlüsselförmigen Öffnung 16 versehen, in die ein Zapfen 17 mit Kopf 18 eingreift und eine weitere Einhakverbindung 10 darstellt.

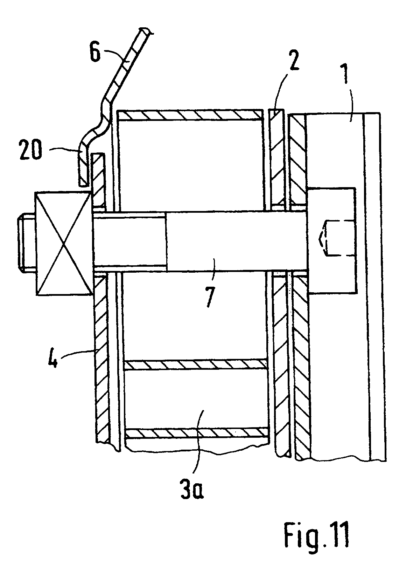

Nach einer weiteren Ausführung gemäß Figur 11 kann die Befestigungplatte 4 in der Säulenwand 6 mittels einer ausgestanzten Lasche stirnseitig übergriffen werden, damit eine Lagesicherung erfolgen kann. Das Umgreifen kann an beiden Stirnseiten, an einer Stirnseite oder auch seitlich erfolgen.

## Patentansprüche

1. Vorrichtung für einen Gurthöhenversteller eines Sicherheitsgurtsystems, die in eingebautem Zustand an einer Säulenwand (6) eines Fahrzeugaufbaus angeordnet ist und eine Rastschiene (1; 1a) und ein Deformationselement (3; 3a; 3b) umfasst, wobei zwischen der Rastschiene (1; 1a) des Gurtsystems und der Säulenwand (6) mindestens ein Deformationselement (3; 3a; 3b) angeordnet und an einer Befestigungsplatte (4) gehalten ist, **dadurch gekennzeichnet, daß** die Rastschiene (1; 1a) mit einer Trägerplatte (2; 2a) unter Zwischenschaltung des Deformationselements (3; 3a; 3b) an derSäulenwand (6) des Fahrzeugaufbaus über eine Befestigungsplatte (4) der Vorrichtung gehalten ist und diese in einer montierten Betriebsstellung (I) anliegend an einer von der Säuleninnenwand (F2) abgekehrten Wandfläche (F1) der Säulenwand (6) und in einer Kopf-Aufprallstellung (II) losgelöst von dieser Fläche (F1) der Säulenwand (6) angeordnet ist.

2. Vorrichtung nach Anspruch 1, **dadurch gekennzeichnet, daß** die Rastschiene (1) mit der Trägerplatte (2) über wenigstens eine durchgehende Schraube (7, 8) zusätzlich an der Säulenwand (6 )und wenigstens über eine Einhakverbindung (9; 10) allein mit der Trägerplatte (2; 2a) verbunden ist, wobei die Schrauben (7, 8) an der Befestigungsplatte (4) in eine Schweißmutter (7a, 8a) einschraubbar sind.

3. Vorrichtung nach den Ansprüchen 1 oder 2, **dadurch gekennzeichnet, daß** die Trägerplatte (2) als Einhakverbindung (9) am unteren Ende mindestens einen Längsschlitz (14, 15) aufweist, der mit mindestens einem vorragenden Hacken (14a, 15a) am Steg der Rastschiene (1) in Eingriff steht.

4. Vorrichtung nach den Ansprüchen 1 oder 2, **dadurch gekennzeichnet, daß** die Trägerplatte (2a) als Einhakverbindung (10) am unteren Ende mindestens eine schlüsselförmige Öffnung (16) aufweist, die mit mindestens einem Zapfenelement (17) am Steg der Rastschiene (1a) in Eingriff steht und das Zapfenelement (17) einen endseitigen Rastkopf (18) aufweist.

5. Vorrichtung nach Anspruch 1, **dadurch gekennzeichnet, daß** das Deformationselement (3; 3a) aus einem plastisch verformbaren Rippenkörper besteht und die Rippen (R) zur Säulenwand und zur Trägerplatte (2; 2a) etwa im rechten Winkel verlaufen und zueinander beabstandet sind und zwischen sich Hohlräume (H) bilden.

6. Vorrichtung nach Anspruch 1, **dadurch gekennzeichnet, daß** das Deformationselement (3b) aus einem plastisch verfombaren Wabenkörper besteht.

7. Vorrichtung nach den Ansprüche 1 oder 5, **dadurch gekennzeichnet, daß** das Deformationselement (3; 3a) im Bereich der Einhakverbindung (9,) bestehend aus zwei Längsschlitzen, im unteren Bereich, zwischen diesen Längsschlitzen (14, 15) angeordnet ist.

8. Vorrichtung nach den Ansprüchen 1 oder 5, **dadurch gekennzeichnet, daß** das Deformationselement (3; 3a; 3b) mindestens eine angeformte Aufnahme (12; 13) für eine Befestigungsschraube (7; 8) aufweist und an dieser gehalten und mit der Säulenwand (6) verbunden ist.

9. Vorrichtung nach einer oder mehreren der vorhergehenden Ansprüche, **dadurch gekennzeichnet, daß** die Befestigungsplatte (4) mindestens an einem freien oberen und/oder unteren Ende von einer Lasche (20) der Säulenwand (6) umgriffen ist, die bei einer Kopf-Aufprallstellung (II) aufbiegbar ist.

10. Vorrichtung nach einem oder mehreren der vorhergehenden Ansprüche **dadurch gekennzeichnet, daß** die Trägerplatte (2; 2a) über Rastmittel mit dem Deformationselement (3; 3a; 3b) verbunden und ein Bauteil bildet.

## Claims

1. A device for a belt-height adjustment means of a safety-belt system, which in the fitted state is arranged on a pillar wall (6) of a vehicle body and comprises a catch rail (1; 1a) and a deformation element (3; 3a; 3b), wherein at least one deformation element (3; 3a; 3b) is arranged between the catch rail (1; 1a) of the belt system and the pillar wall (6) and is held on a fastening plate (4), **characterized in that** the catch rail (1; 1a) is held with a support plate (2; 2a) on the pillar wall (6) of the vehicle body with the interposition of the deformation element (3; 3a; 3b) by way of a fastening plate (4) of the device and the said fastening plate (4) of the device is arranged in an assembled operative position (**I**) resting on a wall face (**F1**) of the pillar wall (6) remote from the inner wall (**F2**) of the pillar and in a head-impact position (**II**) released from the said face (**F1**) of the pillar wall (6).

2. A device according to Claim 1, **characterized in that** the catch rail (1) is connected to the support plate (2) by way of at least one continuous bolt (7, 8) additionally on the pillar wall (6) and at least by way of a hook connexion (9; 10) solely to the support plate (2; 2a), wherein the bolts (7, 8) on the fastening plate (4) can be screwed into a weld nut (7a, 8a).

3. A device according to Claims 1 or 2, **characterized in that** the support plate (2) has at least one longitudinal slot (14, 15) as a hook connexion (9) at the lower end, the longitudinal slot (14, 15) engaging with at least one projecting heel (14a, 15a) on the web of the catch rail (1).

4. A device according to Claims 1 or 2, **characterized in that** the support plate (2a) has at least one key-shaped opening (16) as a hook connexion (10) at the lower end, the key-shaped opening (16) engaging with at least one pin element (17) on the web of the catch rail (1a), and the pin element (17) has a catch head (18) at the end.

5. A device according to Claim 1, **characterized in that** the deformation element (3; 3a) comprises a rib member deformable in a plastic manner, and the ribs (**R**) extend substantially at a right angle to the pillar wall and to the support plate (2; 2a) and are spaced from one another and form cavities (**H**) between themselves.

6. A device according to Claim 1, **characterized in that** the deformation element (3b) comprises a honeycomb member deformable in a plastic manner.

7. A device according to Claims 1 or 5, **characterized in that** the deformation element (3; 3a) is arranged in the region of the hook connexion (9), comprising two longitudinal slots, in the lower region, between the said longitudinal slots (14, 15).

8. A device according to Claims 1 or 5, **characterized in that** the deformation element (3; 3a; 3b) comprises at least one integrally formed receiving means (12; 13) for a fastening bolt (7; 8) and is held on the said fastening bolt (7; 8) and is connected to the pillar wall (6).

9. A device according to one or more of the preceding Claims, **characterized in that** a shackle (20) of the pillar wall (6), which can be bent in a head-impact position (**II**), engages around the fastening plate (4) at least at a free upper and/or lower end.

10. A device according to one or more of the preceding Claims, **characterized in that** the support plate (2; 2a) is connected to the deformation element (3; 3a; 3b) by way of catch means and forms a structural part.

## Revendications

1. Dispositif pour un organe de réglage en hauteur d'une ceinture d'un système de ceinture de sécurité, qui, à l'état monté, est disposé sur une paroi de montant (6) de la carrosserie d'un véhicule et comprend un rail d'encliquetage (1 ; 1a) et un élément de déformation (3 ; 3a ; 3b), au moins un élément de déformation (3 ; 3a ; 3b) étant disposé entre le rail d'encliquetage (1 ; 1a) du système de ceinture et la paroi de montant (6) et maintenu sur une plaque de fixation (4), **caractérisé en ce que** le rail d'encliquetage (1 ; 1a) avec une plaque de support (2 ; 2a) est maintenu, avec interposition de l'élément de déformation (3 ; 3a ; 3b), sur la paroi de montant (6) de la carrosserie du véhicule, par une plaque de fixation (4) du dispositif et cette dernière étant disposée, dans une position de fonctionnement (I), appliquée contre une surface (F1), tournée à l'opposé de la paroi intérieure (F2) du montant, de la paroi de montant (6), et, dans une position de choc de la tête (II), détachée de cette surface (F1) de la paroi de montant (6).

2. Dispositif selon la revendication 1, **caractérisé en ce que** le rail d'encliquetage (1) est relié à la plaque de support (2) par au moins une vis (7, 8) traversante, en plus sur la paroi de montant (6) et, au moins par une liaison à accrochage (9; 10), uniquement à la plaque de support (2 ; 2a), les vis (7, 8) sur la plaque de fixation (4) pouvant être vissées dans un écrou soudé (7a, 8a).

3. Dispositif selon les revendications 1 ou 2, **caractérisé en ce que** la plaque de support (2) présente, comme liaison à accrochage (9), à l'extrémité inférieure, au moins une fente longitudinale (14, 15) qui est en prise avec au moins un crochet (14a, 15a) saillant sur l'âme du rail d'encliquetage (1).

4. Dispositif selon les revendications 1 ou 2, **caractérisé en ce que** la plaque de support (2a) présente comme liaison à accrochage (10), à l'extrémité inférieure, au moins une ouverture (16) en forme de trou de serrure (16) qui est en prise avec au moins un élément à tige (17) sur l'âme du rail d'encliquetage (1a), et l'élément à tige (17) présente une tête d'encliquetage (18) terminale.

5. Dispositif selon la revendication 1, **caractérisé en ce que** l'élément de déformation (3 ; 3a) est constitué d'un corps à nervures déformable plastiquement et les nervures (R) s'étendent à peu près à angle droit par rapport à la paroi du montant et par rapport à la plaque de support (2 ; 2a), et sont espacées les unes des autres et forment entre elles des cavités (H).

6. Dispositif selon la revendication 1, **caractérisé en ce que** l'élément de déformation est constitué d'un corps à nid d'abeille déformable plastiquement.

7. Dispositif selon les revendications 1 ou 5, **caractérisé en ce que** l'élément de déformation (3 ; 3a) est disposé dans la zone de la liaison à accrochage (9) constituée de deux fentes longitudinales, dans la zone inférieure, entre ces fentes longitudinales (14, 15).

8. Dispositif selon les revendications 1 ou 5, **caractérisé en ce que** l'élément de déformation (3 ; 3a ; 3b) présente au moins un logement (12; 13) rapporté par formage pour une vis de fixation (7 ; 8), et est maintenu sur celle-ci et relié à la paroi de montant (6).

9. Dispositif selon une ou plusieurs des revendications précédentes, **caractérisé en ce que** la plaque de fixation (4) est entourée, au moins à une extrémité libre supérieure et/ou inférieure, par une patte (20) de la paroi de montant (6), qui peut se plier dans une position de choc de la tête (II).

10. Dispositif selon une ou plusieurs des revendications précédentes, **caractérisé en ce que** la plaque de support (2 ; 2a) est reliée par des moyens d'encliquetage à l'élément de déformation (3 ; 3a ; 3b) et forme un composant.
